# EUROPÄISCHE PATENTSCHRIFT

(11) **EP 0 902 488 B1**
(45) Veröffentlichungstag und Bekanntmachung des Hinweises auf die Patenterteilung: **23.04.2003**
(21) Anmeldenummer: 98116303.3
(22) Anmeldetag: 28.08.1998
(51) Int. Cl.: H01L 41/09

(54) **Elektrostriktiver Stellantrieb**
Electrostrictive actuator
Organe d'actionnement électrostrictif

(30) Priorität: 10.09.1997 DE 19739594
(43) Veröffentlichungstag der Anmeldung: 17.03.1999
(73) Patentinhaber: EADS Deutschland GmbH, 85521 Ottobrunn (DE)
(72) Erfinder: Jänker, Peter, Dr., 85748 Garching (DE)

(56) Entgegenhaltungen:
- US-A- 4 808 874

## Beschreibung

Die Erfindung bezieht sich auf einen elektrostriktiven Stellantrieb nach dem Oberbegriffs des Patentanspruchs 1.

Bei dem aus der US 4 937 489 bekannten elektrostriktiven Stellantrieb dieser Art besteht der Übersetzungsmechanismus aus einem das piezoelektrische Stellelement umschließenden, massiven Rechteckrahmen, dessen Rahmenteile aus Gründen einer spielfreien Verkoppelung anstatt durch mechanische Gelenke durch einstückig angeformte, blattfederartige Gelenkstellen derart miteinander verbunden sind, daß ein rautenförmiges Gelenkviereck entsteht, durch welches die geringen Längenänderungen des piezoelektrischen Stellelements kinematisch in einen vielfach größeren Ausgangshub des Stellantriebs umgewandelt werden. Im Hinblick auf die einwirkenden hohen Zugbelastungen müssen die biegeelastischen Gelenkstellen eine große Zugfestigkeit und -steifigkeit und einen demensprechend großen Querschnitt besitzen, woraus sich jedoch gleichzeitig der Nachteil ergibt, daß die aus den Biegebewegungen resultierende Randfaserdehnung und die Biegesteifigkeit der Biegegelenke mit zunehmendem Querschnitt stark anwächst und daher von den Biegegelenken bei lastgerechter Auslegung elastische Rückstellkräfte erzeugt werden, die den elektrisch induzierten Längenänderungen des Stellelements entgegenwirken und dadurch den Effektivhub des Stellantriebs deutlich reduzieren.

Aufgabe der Erfindung ist es, einen Stellantrieb der eingangs genannten Art zu schaffen, der eine kompakte und in Lastrichtung hochsteife Bauweise und zugleich eine hohe energetische Effizienz und lange Lebensdauer besitzt.

Diese Aufgabe wird erfindungsgemäß durch den im Patentanspruch 1 gekennzeichneten Stellantrieb gelöst.

Erfindungsgemäß wird durch die Unterteilung der einzelnen Gelenkstellen und jeweils eines der über eine Gelenkstelle verbundenen Rahmenteile in mehrere getrennte Biegeelemente bzw. Einzelhebel bei sonst gleichen Parametern, d.h. vor allem gleichem Gesamtquerschnitt und gleicher Zugfestigkeit und -steifigkeit der Gelenkstellen, die Biegesteifigkeit des Stellantriebs im Gelenkbereich signifikant, nämlich mit dem Quadrat des gewählten Unterteilungsgrades, verringert, wodurch die von den Biegegelenken verursachte elastische Rückstellkraft deutlich reduziert und der nutzbare Hub des Stellantriebs wesentlich erhöht wird, mit dem zusätzlichen Effekt, daß die Randfaserdehnungen an den Biegegelenken, bezogen auf den Biegewinkel, ebenfalls abnehmen und dadurch die Lebensdauer des Stellantriebs erheblich verbessert wird.

Durch die nach Anspruch 2 bevorzugte Zweifach-Unterteilung wird die Biegesteifigkeit an den Gelenkstellen im Vergleich zu einer ansonsten gleichdimensionierten Biegegelenkkette bereits um 75% und die Randfaserdehnung im Biegegelenkbereich um 50% reduziert. Wird, wie nach Anspruch 3 bevorzugt, die Zweifach-Unterteilung mit einem nach Art eines Gelenkachtecks gestalteten Übersetzungsmechanismus kombiniert, so werden die auf Seiten des piezoelektrischen Stellelements liegenden und die den Ausgang des Übersetzungsmechanismus bildenden Rahmenteile einteilig ausgebildet und die dazwischenliegenden Rahmenteile jeweils in zwei gleich lange, zueinander parallel verlaufende Einzelhebel unterteilt, wodurch eine zwängungsfreie Parallelführung der Ausgangsglieder gewährleistet wird.

Um die Biegesteifigkeit und die Randfaserdehnungen im Biegegelenkbereich des Stellantriebs noch weiter zu verringern, wird in besonders bevorzugter Ausgestaltung der Erfindung nach Anspruch 4 anstelle einer zweifachen eine noch feinere Unterteilung gewählt, wobei in diesem Fall die Einzelhebel der unterteilten Rahmenteile wiederum im Hinblick auf eine zwängungsfreie Kinematik gleich lang ausgebildet und parallel zueinander angeordnet sind.

Aus Herstellungs- und Genauigkeitsgründen sind die Rahmenteile einschließlich der Einzelhebel und Biegeelemente nach Anspruch 5 zweckmäßigerweise einstückig, z.B. mittels Drahterosion, hergestellt.

Vor allem für dynamische Stellaufgaben empfiehlt es sich nach Anspruch 6, den Übersetzungsmechanismus mit einer in Druckrichtung des Stellelements wirkenden Vorlastfeder zu versehen, um äußere Zugbelastungen des in dieser Hinsicht sehr lastempfindlichen Festkörper-Stellelements zu vermeiden. Gemäß einer hierzu alternativen, besonders bevorzugten Ausgestaltung der Erfindung enthält der Stellantrieb nach Anspruch 7 zwei mechanisch seriell angeordnete, elektrisch gegensinnig angesteuerte, jeweils aus einem Stellelement und einem Übersetzungsmechanismus bestehende Aktuatoren mit einem gemeinsamen, die Übersetzungsmechanismen beider Aktuatoren ausgangsseitig miteinander verkoppelnden Abtriebsglied. Ein derartiger Stellantrieb hat den Vorteil, daß thermische Ausdehnungen kompensiert werden und eine Vorspannfeder entfällt, wobei sich die Abtriebskräfte beider Aktuatoren addieren, während der nutzbare Arbeitshub des Stellantriebs gleich bleibt.

Die Erfindung wird nunmehr anhand zweier Ausführungsbeispiele in Verbindung mit den Zeichnungen näher erläutert. Es zeigen in stark schematisierter Darstellung:
- **Fig. 1**: einen Stellantrieb nach der Erfindung mit einem nach Art eines Gelenkachtecks gestalteten Übersetzungsmechanismus mit Zweifach-Unterteilung der Biegegelenke und Rahmenteile;
- **Fig. 2a**: einen Teilausschnitt des Stellantriebs nach Fig. 1, jedoch mit Dreifach-Unterteilung;
- **Fig 2b**: eine der Fig. 2a entsprechende Darstellung eines Stellantriebs nach dem Stand der Technik mit einteiligen, im übrigen jedoch gleich wie nach Fig. 2a dimensionierten Biegegelenken und nicht unterteilten Rahmenteilen; und
- **Fig 3**: einen Stellantrieb in Tandembauweise gemäß einem weiteren Ausführungsbeispiel der Erfindung.

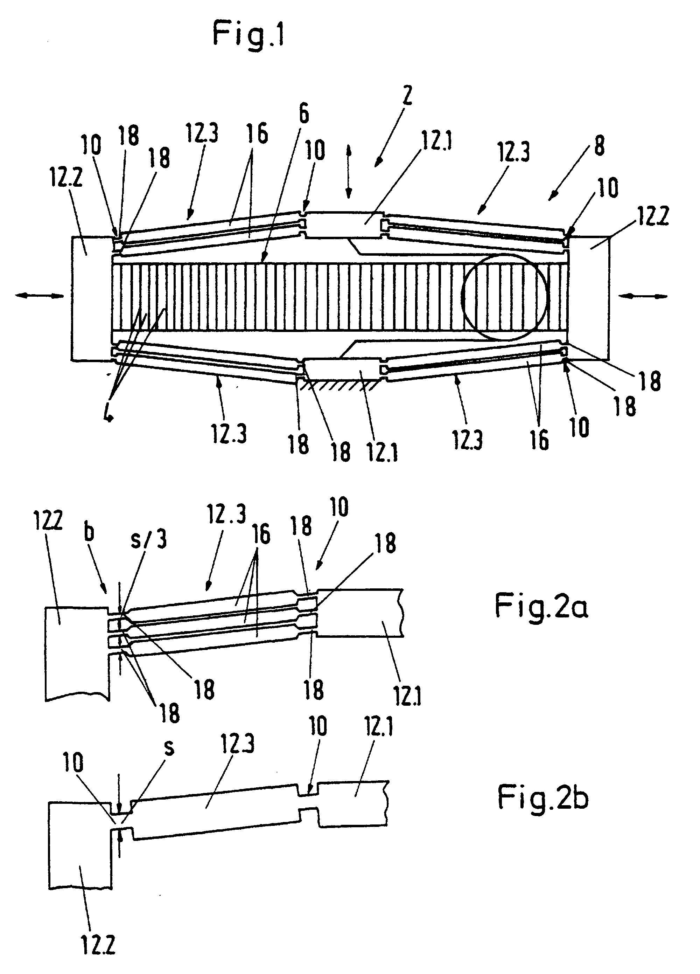

Der in Fig. 1 gezeigte, elektrostriktive Stellantrieb 2 enthält ein aus paketartig aneinandergereihten Piezoschichten 4 zusammengesetztes Festkörper-Stellelement 6 und einen Übersetzungsmechanismus 8 in Form eines das Stellelement 6 umschließenden Achteck-Rahmens, bestehend aus starren, über biegeelastische Gelenke 10 miteinander verbundenen Rahmenteilen 12, sowie ein auf die ausgangsseitigen Rahmenteile 12.1 quer zur Längsrichtung des Stellelements 6 wirkendes Federbügelelement 14, durch welches das Stellelement 6 in Druckrichtung unter Vorspannung gehalten wird. Die zwischen den ausgangsseitigen und den mit den Enden des Stellelements 6 verbundenen Rahmenteilen 12.1 und 12.2 liegenden Rahmenteile 12.3 schließen mit den Rahmenteilen 12.1 einen stumpfen Winkel von etwas weniger als 180° ein.

Wird an die Piezoschichten 4 eine elektrische Spannung angelegt, so dehnt sich das Stellelement 6 in Längsrichtung aus und die schräg verlaufenden Rahmenteile 12.3 werden entgegen der Kraft des Federbügels 14 zur Längsachse des Stellelements 6 hin verkippt, wodurch die ausgangsseitigen Rahmenteile 12.1 aufeinander zubewegt werden. Die Hubbewegung zwischen den ausgangsseitigen Rahmenteilen 12.1, die aufgrund der gewählten Übersetzungskinematik um ein Vielfaches größer als die Längenänderungen des Stellelements 6 ist, wird am oberen Rahmenteil 12.1 abgenommen, während das untere Rahmenteil 12.1 ortsfest verankert ist. Werden die Piezoschichten 4 stromlos geschaltet, so zieht sich das Stellelement 6 wieder auf die Ausgangslänge zurück und die Ausgangsglieder 12.1 kehren unter der Wirkung des Federbügels 14 erneut in die gezeigte Hublage zurück. Insoweit ist der Stellantrieb 2 von herkömmlicher Bauweise.

Nach dem Stand der Technik (Fig. 2b), wie er zum Beispiel in der US 4,808,874 A beschrieben ist, sind die schräg verlaufenden Rahmenteile 12.3 ebenso wie die Rahmenteile 12.1 und 12.2 einteilig massiv ausgebildet und die Biegegelenkstellen 10 bestehen jeweils aus einem einzigen Biegeelement, welches bei gegebener Breite eine bestimmte Querschnittshöhe s besitzen muß, um eine unter Berücksichtigung der einwirkenden Zuglasten ausreichende Zugfestigkeit und -steifigkeit zu gewährleisten. Zugleich ist aber auch die Biegesteifigkeit der Biegegelenke 10, d.h. die von den Gelenken 10 entgegen der Biegebewegung erzeugte Rückstellkraft, eine Funktion der Querschnittsdicke s und erhöht sich entsprechend der dritten Potenz von s. Ebenso ist die bei einem gegebenen Biegewinkel entstehende Randfaserdehnung der Biegegelenke 10 linear von der Querschnittsdicke s abhängig.

Bei dem in Fig. 1 und 2a gezeigten Stellantrieb 2 hingegen sind die biegeelastischen Gelenkstellen 10 und die Rahmenteile 12.3 jeweils mehrfach, nämlich gemäß Fig. 1 zweifach und gemäß Fig. 2a dreifach, unterteilt, derart, daß das Rahmenteil 12.3 aus zwei (drei) getrennten, gleich langen, parallel zueinander verlaufenden Einzelhebeln 16 besteht und jede Biegegelenkstelle 10 durch zwei (drei) in Zugrichtung verlaufende, übereinander gestaffelte Biegeelemente 18 gebildet wird, die jeweils zwischen dem Ende eines Einzelhebels 16 und einem der Rahmenteile 12.1 bzw. 12.2. angeordnet sind. Aufgrund der Unterteilung verringert sich die Biegesteifigkeit jeder Gelenkstelle 10 bei sonst gegenüber Fig. 2b unveränderten Parametern, also gleicher Querschnittsbreite und Gesamtdicke s der Biegegelenke 10 und somit gleicher Zugfestigkeit und -steifigkeit, um den Faktor 1/n², wobei n dem Unterteilungsgrad entspricht. Demgemäß wird die Biegesteifigkeit im Biegegelenkbereich 10 durch eine Zweifach-Unterteilung (Fig. 1), bei der die Querschnittsdicke eines einzelnen Biegeelements 18 nur noch halb so groß wie nach Fig. 2b ist, im Vergleich zu einer ungeteilten Rahmen- und Gelenkbauweise auf 25% und durch eine Dreifach-Unterteilung (Fig. 2a), wo die Querschnittsdicke eines einzelnen Biegeelements 18 auf s/3 reduziert ist, auf 1/9 eines ansonsten gleichwertigen Stellantriebs abgesenkt. Gleichermaßen verringern sich die von den Gelenkstellen 10 verursachten elastischen Rückstellkräfte, die der elektrisch induzierten Längenänderung des Stellelements 6 entgegenwirken, so daß der nutzbare Arbeitshub des Stellantriebs 2 wesentlich gesteigert wird. Zusätzlich wird auch die durch die Biegebewegung im Gelenkbereich 10 verursachte Randfaserdehnung der Biegeelemente 18 aufgrund der reduzierten Querschnittsdicke um den Faktor 1/n verringert und dadurch die Dauerfestigkeit im Biegegelenkbereich 10 deutlich verbessert.

Durch die mit der Aufteilung der Biegegelenke 10 kombinierte Aufspaltung der Rahmenteile 12.3 in eine entsprechende Anzahl von separaten, jeweils mit dem benachbarten Rahmenteil 12.1 bzw. 12.2 über ein einzelnes Biegeelement 18 verbundenen Einzelhebeln 16 wird eine zwängungsfreie Kinematik des Übersetzungsmechanismus 8 sichergestellt, so daß den durch die Längenänderungen des Stellelements 6 verursachten Hubbewegungen der Ausgangsglieder 12.1 allein die aus der Biegesteifigkeit der Biegeelemente 18 resultierenden Rückstellkräfte entgegenwirken. Bei dem in den Figuren gezeigten Achteck-Übersetzungsmechanismus 8 sind die Einzelhebel 16 der unterteilten Rahmenteile 12.3 jeweils parallel zueinander ausgerichtet und gleich lang ausgebildet, woraus sich die für eine zwängungsfreie Kinematik des gezeigten Übersetzungsmechanismus 8 erforderliche Parallelogrammführung ergibt.

Aus Herstellungs- und Genauigkeitsgründen kann der gesamte Übersetzungsmechanismus 8 einschließlich der unterteilten Rahmenteile 12.3 und der Biegeelemente 18 aus einem Stück z.B. durch Drahterosion aus einem Metallblock gefertigt sein.

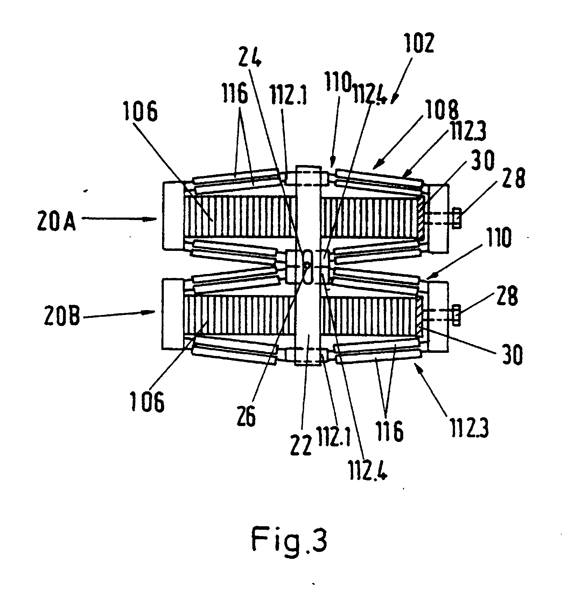

Bei dem Ausführungsbeispiel nach Fig. 3, wo die dem ersten Ausführungsbeispiel entsprechenden Bauelemente durch ein um 100 erhöhtes Bezugszeichen gekennzeichnet sind, besteht der Stellantrieb anstatt aus einem einzigen aus zwei, in Tandembauweise mechanisch seriell angeordneten, jeweils durch ein Stellelement 106 und einen Achteck-Übersetzungsmechanismus 108 gebildeten Aktuatoren 20A und 20B, wobei die Gelenkbereiche 110 wiederum mehrfach unterteilt sind und die Rahmenteile 112.3 jeweils aus mehreren getrennten Einzelhebeln 116 bestehen. Die einander abgekehrten Ausgangsglieder 112.1 der beiden Aktuatoren 20 sind über einen Metallbügel 22 starr miteinander verbunden, während die einander zugekehrten Rahmenteile 112.4 auf ein gemeinsames, in einem Schlitz 24 des Metallbügels 22 linearverschiebliches Abtriebsglied 26 wirken.

Die piezoelektrischen Stellelemente 106 werden bei dieser Anordnung elektrisch gegensinnig angesteuert, d.h. die Summe der beiden Steuerspannungen an den Aktuatoren 20A und 20B entspricht stets der maximalen Betriebsspannung. Die nutzbare Abtriebskraft am Abtriebsglied 26 ist doppelt so hoch, der nutzbare Arbeitshub hingegen bleibt gleich wie bei der Einzelanordnung nach Fig. 1. Der Stellantrieb 102 nach Fig. 3 hat den Vorteil, daß thermische Ausdehnungen kompensiert werden und eine Vorspannfeder entfällt. Zur Einstellung der Nullage kann eine in Längsrichtung des Stellelements 106 wirksame Verstelleinrichtung (Einstellschraube 28 und Druckplatte 30) zwischen Übersetzungsmechanismus 108 und Stellelement 106 angeordnet sein.

## Patentansprüche

1. Elektrostriktiver Stellantrieb mit einem bei Anlegen einer elektrischen Spannung längenveränderlichen Festkörper-Stellelement und einem die Hubbewegungen des Stellelements verstärkenden Übersetzungsmechanismus, bestehend aus starren, über biegeelastische Gelenkstellen miteinander verbundenen Rahmenteilen,
**dadurch gekennzeichnet, daß**
die Gelenkstellen (10) jeweils aus mehreren übereinanderliegenden, elastischen Biegeelementen (18) mit zueinander parallelen Biegegelenkachsen bestehen und einerseits an ein sämtliche Biegelemente der Gelenkstelle integral miteinander verbindendes Rahmenteil (12.1 bzw. 12.2) angeschlossen sind, während das an die Gelenkstelle angeschlossene andere Rahmenteil (12.3) in mehrere getrennte, jeweils mit einem Biegeelement der Gelenkstelle verbundene Einzelhebel (16) unterteilt ist.

2. Elektrostriktiver Stellantrieb nach Anspruch 1,
**dadurch gekennzeichnet, daß**
die Gelenkstellen (10) und die unterteilten Rahmenteile (12.3) jeweils aus zwei Biegeelementen (18) bzw. Einzelhebeln (16) bestehen.

3. Elektrostriktiver Stellantrieb nach Anspurch 2, mit oktagonal angeordneten Rahmenteilen,
**dadurch gekennzeichnet, daß**
die mit dem Stellelement (6) endseitig verkoppelten und die hierzu senkrecht verlaufenden, die Ausgangsglieder des Übersetzungsmechanismus (8) bildenden Rahmenteile (12.1 und 12.2) einteilig ausgebildet und die dazwischen liegenden Rahmenteile (12.3) jeweils in zwei gleich lange, zueinander parallel verlaufende Einzelhebel (16) unterteilt sind.

4. Elektrostriktiver Stellantrieb nach Anspruch 1,
**dadurch gekennzeichnet, daß**
bei mehr als zweifacher Unterteilung der Gelenkstellen (10) und Rahmenteile (12.3) die Einzelhebel (16) der jeweils unterteilten Rahmenteile gleich lang ausgebildet und parallel zueinander angeordnet sind.

5. Elektrostriktiver Stellantrieb nach einem der vorhergehenden Ansprüche,
**dadurch gekennzeichnet, daß**
die Rahmenteile (12) einschließlich der Einzelhebel (16) und Biegeelemente (18) einstückig ausgebildet sind.

6. Elektrostriktiver Stellantrieb bei einem der vorhergehenden Ansprüche,
**dadurch gekennzeichnet, daß**
der Übersetzungsmechanismus (8) in Druckrichtung des Stellelements (6) federnd vorgespannt ist.

7. Elektrostriktiver Stellantrieb nach einem der Ansprüche 1 bis 5,
**gekennzeichnet durch**
zwei mechanisch seriell angeordnete, elektrisch gegensinnig angesteuerte, jeweils aus einem Stellelement (106) und einem Übersetzungsmechanismus (108) bestehende Aktuatoren (20A, 20B) mit einem gemeinsamen, die Übersetzungsmechanismen beider Aktuatoren ausgangsseitig miteinander verkoppelnden Abtriebsglied (26).

## Claims

1. Electrostrictive actuator with a solid-state actuating element, whose length varies upon application of an electric voltage, and a transmission mechanism which amplifies the stroke movements of the actuating element, consisting of rigid frame parts joined to one another through flexible articulated points,
**characterized in that**
the articulated points (10) respectively consist of several superimposed elastic bending elements (18) with bending articulation axes in parallel to one another and are attached, on the one hand, to a frame part (12.1 and 12.2) which integrally joins to one another all bending elements of the articulated point, while the other frame part (12.3) attached to the articulated point is subdivided into several separate discrete levers (16) which are respectively joined to a bending element of the articulated point.

2. Electrostrictive actuator according to claim 1,
**characterized in that**
the articulated points (10) and the subdivided frame parts (12.3) in each case consist of two bending elements (18) and discrete levers (16) respectively.

3. Electrostrictive actuator according to claim 2, with octagonally disposed frame parts,
**characterized in that**
the frame parts (12.1 and 12.2) coupled end-wise to the actuating element (6) and those running perpendicularly to them, forming the output members of the transmission mechanism (8), are made as a single piece and the intermediate frame parts (12.3) are respectively subdivided into two discrete levers (16) of equal length running in parallel to one another.

4. Electrostrictive actuator according to claim 1,
**characterized in that**
in the case of more than two-fold subdivision of the articulated points (10) and frame parts (12.3), the discrete levers (16) of the respectively subdivided frame parts are made of equal length and disposed in parallel to one another.

5. Electrostrictive actuator according to any one of the preceding claims,
**characterized in that**
the frame parts (12), including the discrete levers (16) and bending elements (18) are made as a single piece.

6. Electrostrictive actuator in the case of any one of the preceding claims
**characterized in that**
the transmission mechanism (8) is resiliently biased in the pressure direction of the actuating element (6).

7. Electrostrictive actuator according to any one of claims 1 to 5,
**characterized by**
two actuators (20A, 20B), disposed in mechanical series, electrically activated in opposition, each consisting of an actuating element (106) and a transmission mechanism (108), with a common drive member (26) which couples together the transmission mechanisms of both actuators on the output side.

## Revendications

1. Organe d'actionnement électrostictif comportant un élément d'actionnement à corps solides, de longueur variable par application d'une tension électrique ainsi qu'un mécanisme de démultiplication amplifiant les mouvements de déplacement de l'élément d'actionnement, ce mécanisme se composant de parties de cadre rigide reliées par des points d'articulation élastiques en flexion,
**caractérisé en ce que**
les points d'articulation (10) sont formés chaque fois de plusieurs éléments de flexion (18) élastiques, avec des axes de flexion parallèles, d'une part reliés à une partie de cadre (12.1, 12.2) reliant de manière intégrale tous les éléments de flexion des points d'articulation alors que l'autre partie de cadre (12.3) reliée aux points d'articulation est subdivisée en plusieurs leviers séparés (16), distincts, reliés chaque fois à un élément de flexion du point d'articulation.

2. Organe d'actionnement électrostictif selon la revendication 1,
**caractérisé en ce que**
les points d'articulation (10) et les parties de cadre subdivisées (12.3) se composent chaque fois de deux éléments de flexion (18) ou de leviers séparés (16).

3. Organe d'actionnement électrostictif selon la revendication 2 avec des parties de cadre orthogonales,
**caractérisé en ce que**
les parties de cadre (12.1, 12.2) couplées d'un côté à l'élément d'actionnement (6) et formant les organes de sortie du mécanisme de démultiplication (8), dirigés perpendiculairement, sont réalisés en une seule pièce et les parties de cadre (12.3) intermédiaires sont chaque fois subdivisées en deux leviers séparés (16) de même longueur, parallèles.

4. Organe d'actionnement électrostictif selon la revendication 1,
**caractérisé en ce que**
pour une subdivision des points d'articulation (10) et des parties de cadre (12.3) plus de deux fois, les leviers séparés (16) des parties de cadre chaque fois subdivisés sont de même longueur et sont parallèles.

5. Organe d'actionnement électrostictif selon l'une des revendications précédentes,
**caractérisé en ce que**
les parties de cadre (12) y compris les leviers séparés (16) et les éléments de flexion (18) sont en une seule pièce.

6. Organe d'actionnement électrostictif selon l'une quelconque des revendications,
**caractérisé en ce que**
le mécanisme de démultiplication (8) est précontraint élastiquement dans la direction de pression de l'élément d'actionnement (6).

7. Organe d'actionnement électrostictif selon l'une des revendications 1 à 5,
**caractérisé par**
deux actionneurs (20A, 20B) formés chacun d'un élément d'actionnement (106) et d'un mécanisme de démultiplication (108), ces deux actionneurs étant montés mécaniquement en série en étant commandés électriquement en sens opposé, et ces actionneurs ayant un organe de sortie (26) commun, couplant entre eux les mécanismes de démultiplication des deux actionneurs du côté de la sortie.
